# EUROPÄISCHE PATENTSCHRIFT

(11) **EP 3 378 736 B1**
(45) Veröffentlichungstag und Bekanntmachung des Hinweises auf die Patenterteilung: **29.04.2020**
(21) Anmeldenummer: 17161794.7
(22) Anmeldetag: 20.03.2017
(51) Int. Cl.: B62D 11/04

(54) **ANTRIEBSSYSTEM FÜR KETTENFAHRZEUGE UND KETTENGETRIEBENE ARBEITSMASCHINEN SOWIE VERFAHREN ZUR STEUERUNG EINES ANTRIEBSSYSTEMS FÜR KETTENFAHRZEUGE UND KETTENGETRIEBENE ARBEITSMASCHINEN**
DRIVE SYSTEM FOR TRACKED VEHICLES AND TRACKED WORKING MACHINES AND METHOD FOR CONTROLLING A DRIVE SYSTEM FOR TRACKED VEHICLES AND TRACKED WORKING MACHINES
SYSTÈME D'ENTRAÎNEMENT POUR VÉHICULES À CHENILLES ET ENGINS DE TRAVAIL À CHENILLES ET PROCÉDÉ DE COMMANDE D'UN SYSTÈME D'ENTRAÎNEMENT POUR VÉHICULES À CHENILLES ET ENGINS DE TRAVAIL À CHENILLES

(43) Veröffentlichungstag der Anmeldung: 26.09.2018
(73) Patentinhaber: Repaircraft PLC, The Common Crainleigh, Surrey GU6 8LU (GB)
(72) Erfinder: Tolksdorf, Detlef, 45141 Essen (DE)
(74) Vertreter: Döpp, Ludger

(56) Entgegenhaltungen:
- EP-A1- 0 025 372
- EP-A1- 0 151 207
- WO-A1-00/06408

## Beschreibung

Die Erfindung betrifft ein Antriebssystem für Kettenfahrzeuge und kettengetriebene Arbeitsmaschinen gemäß gattungsbildendem Teil des ersten Patentanspruchs.

Ein Antriebssystem für Gleiskettenfahrzeuge wird beispielsweise in der US 5,282,516 beschrieben. Vorgeschlagen wird ein offener hydrostatischer Kreislauf mit jeweils einem Kettenantrieb pro Fahrzeugseite, wobei durch unterschiedliche Verstellung der Hydromotoren Lenkbewegungen ausgeführt werden und die Bremsleistung der einen Seite über Ventilsteuerungen auf die andere Fahrzeugseite geleitet wird, mit dem Ziel der Energierückgewinnung bzw. der Verbesserung der Wirkungsgrade.

Eine weitere Antriebseinrichtung ist in der JP 06116984 A beschrieben. Vorgeschlagen wird ein im offenen hydrostatischen Kreislauf betriebenes Lenksystem mit Überkreuzventilen zur Regenerierung von Energie bzw. Leistung.

Durch die EP 00 25372 A1 ist ein Antriebssystem mit hydrostatischer Kraftübertragung für die Translation und Lenkung mit hydraulischer Leistungsrückführung in Kurven auf schweren Kettenfahrzeugen bzw. schweren Fahrzeugen mit Antriebsrädern ohne Lenkung gemäß der Präambel des Anspruchs 1 bekannt geworden. Gegeben sind zwei hydrostatische Translationsgetriebe, die beiderseits des Fahrzeugs vorgesehen sind und ein Lenkungsgetriebe aufweisen.

Auch wenn hier bereits Weiterentwicklungen durch Verbesserung der Wirkungsgrade über Rekuperation von Energie herbeigeführt werden können, ist jedoch nachteilig, dass die mit relativ schlecht behafteten Wirkungsgraden beteiligten Hydromotoren und Hydropumpen permanent in voller Baugröße auch in den Betriebszuständen im Einsatz sind, in denen der Bedarf an Größe der Hydromotoren und Hydropumpen niedriger liegt, als es die maximale Leistung, maximale Geschwindigkeit oder maximale Zugkraft erforderlich machen. Die Auslegung der Baugrößen der Hydromotoren und Hydropumpen muss also den von der Maschine geforderten Maximalwerten genügen. D.h. in der Regel, dass die Hydromotoren desto größer werden, je höher die Maximalzugkraft der Maschine sein soll, wobei aber große Hydromotoren in der Regel kleines Drehzahlvermögen aufweisen, also nachteilig bzgl. der maximalen Fahrzeuggeschwindigkeit sind. Die Größe der Hydraulikpumpen richtet sich nach der geforderten maximalen Fahrzeugleistung, auch dann, wenn im Lastkollektiv die maximale Leistung nur selten gefordert wird, wobei allerdings die absoluten Leistungsverluste großer Hydraulikpumpen höher sind, als die von kleinen Hydraulikpumpen.

Die maximal geforderte Leistung muss darüber hinaus bei über Ketten angetriebenen Fahrzeugen komplett über einen der beidseitigen Hydraulikkreisläufe fließen können aber auch in beliebigen Höhen auf beide Hydraulikkreisläufe aufteilbar sein. Die Dimensionierung der Größe der Hydraulikpumpen muss dabei also konsequent dem maximal möglichen Leistungsfluss Rechnung tragen, so dass die Hydraulikpumpen in den Betriebsfällen der aufgeteilten Leistung entsprechend überdimensioniert sind, mit der Folge, dass auch deren Leistungsverluste entsprechend höher liegen, die bei großen Hydraulikpumpen naturgemäß größer sind, als bei kleineren Einheiten.

Ziel des Erfindungsgegenstandes ist es, den Stand der Technik dahingehend weiterzubilden, dass Antriebssysteme mit optimierten Hydraulikkreisläufen für in bestimmten Betriebsfällen nicht benötigte aber verlustbehaftete Hydromotoren und/oder Hydropumpen geschaffen werden.

Darüber hinaus soll ein Verfahren zur Steuerung eines Antriebssystems für Kettenfahrzeuge und kettengetriebene Arbeitsmaschinen vorgestellt werden, das gegenüber dem Stand der Technik erhöhte Wirkungsgrade aufweist.

Dieses Ziel wird dadurch erreicht, dass jeder Hydraulikkreislauf aus mindestens jeweils zwei Hydraulikpumpen und mindestens einem Hydraulikmotor besteht, wobei die Hydraulikpumpen in Wirkverbindung mit dem Pumpenverteilergetriebe stehen, wobei entweder mindestens ein Hydraulikmotor und/oder mindestens eine Hydraulikpumpe zur Verbesserung der Wirkungsgrade zu- oder abschaltbar ist.

Zum Einsatz gelangt jeweils ein kompletter Hydraulikkreislauf pro Fahrzeugseite, wobei die Hydraulikkreisläufe wahlweise unabhängig voneinander in Bezug der Höhe und Richtung ihres Leistungsflusses eingestellt werden können, wobei jeder der beiden Hydraulikkreisläufe anstelle einer minimalen Anzahl groß dimensionierter Hydromotoren und Hydropumpen, kleiner dimensionierte Hydromotoren und Hydropumpen in erhöhter Anzahl beinhalten, mit der Möglichkeit, abhängig vom momentanen Bedarf an Leistung, Geschwindigkeit und Zugkraft, gezielt einzelne dieser Hydromotoren und Hydropumpen wahlweise zu- oder abzuschalten, um mit den verbleibenden Hydromotoren und Hydropumpen die momentan physikalisch geforderte Arbeit mit verbesserten Wirkungsgraden zu verrichten.

Dieses Ziel wird verfahrensgemäß auch erreicht durch ein Verfahren zur Steuerung eines Antriebssystems für Kettenfahrzeuge und mobilen kettengetriebenen Arbeitsmaschinen Arbeitsmaschine, wobei zur Verbesserung der Wirkungsgrade die Richtung und die Höhe der Leistungsflüsse der Hydraulikkreisläufe unabhängig voneinander stufenlos einstellbar sind ist, wobei über die Steuer- und Regelungseinheit die Stellung des Gaspedales als Führungsgröße erfasst wird und mit den Drehzahlen der Hydraulikfahrmotoren als Istwerte verglichen werden und davon abhängig die Verstellung der Hydraulikpumpen und die Verstellung der Hydraulikfahrmotoren eingestellt werden und die Zu- und Abschaltung der Hydraulikpumpen und Hydraulikfahrmotoren erfolgt.

Vorteilhafte Weiterbildungen des Erfindungsgegenstandes und des erfindungsgemäßen Verfahrens sind den zugehörigen Unteransprüchen zu entnehmen.

Das Antriebssystem besteht in einer ersten Ausgestaltungsform aus mindestens zwei Hydraulikkreisläufen, die jeweils mindestens zwei Hydraulikpumpen und zwei Hydraulikmotoren beinhalten, wobei die Ansteuerung der Hydraulikkreisläufe unabhängig voneinander vorgesehen ist, zur Erreichung einer möglichst hohen Flexibilität im Hinblick auf das Zu- und Abschalten einzelner Hydromotoren und Hydropumpen. Bei Bedarf kann die Zu- und Abschaltung einzelner Hydromotoren und Hydropumpen auch unsymmetrisch zwischen den beiden Hydraulikkreisläufen erfolgen. Hierbei kann z.B. beim Rechtslenken der Leistungsfluss eines rechten Hydraulikkreislaufes mit Bremswirkung im Hinblick auf die Fahrzeugmasse eingestellt werden, wobei bei niedrigem Bremsleistungsbedarf jeweils ein Hydraulikmotor und eine Hydraulikpumpe abgeschaltet werden kann und dabei wirkungsgradoptimiert Leistung bzw. Energie von einem rechten Hydraulikmotor zu einer dann motorisch wirkenden rechten Hydraulikpumpe fließt, um dann einen primären Antriebsmotor, z.B. Dieselmotor, unterstützen zu können.

Die rekuperierte Energie steht dann im Anfangsbereich des Antriebsstrangs zur Verfügung und kann von hier aus flexibel auf alle Verbraucher verteilt werden. Die rekuperierte Energie kann dabei auch dem linken Hydraulikkreislauf zugeführt werden, um z.B. additiv zum Leistungsfluss vom Dieselmotor eingesetzt zu werden. Der linke Hydraulikkreislauf muss dann ggf. aufgrund der im Antriebsstrang vom rechten zum linken Hydraulikkreislauf kreisenden Leistung sogar mehr Leistung übertragen, als der Dieselmotor maximal liefern kann, so dass in diesem Betriebsfall zumindest zwei Pumpen im linken Hydraulikkreislauf zugeschaltet sind.

Beim Linkslenken erfolgt die gleiche Prozedur mit den jeweils andersseitigen Komponenten.

Das Antriebssystem kann das Fahrzeug über die beidseitig angebrachten Hydraulikkreisläufe antreiben, indem ein primärer Antriebsmotor, z.B. Dieselmotor, über ein Pumpenverteilergetriebe Hydraulikpumpen antreibt, die durch Vergrößerung ihres Schwenkwinkels stetig mehr Hydrauliköl fördern, das getrennt auf die beidseitig angebrachten Hydraulikmotoren geleitet wird, deren Abtriebswellen dadurch stetig schneller rotieren. Mit dem Erreichen der maximalen Schwenkwinkel der Hydraulikpumpen werden zur weiteren Erhöhung der Rotationsbewegungen die Schwenkwinkel der Hydraulikmotoren reduziert. Die Abtriebswellen der Hydraulikmotoren können beidseitig und unabhängig voneinander Summierungsgetriebe antreiben und wahlweise zusätzlich in Reihe geschaltete weitere Getriebe, die ihrerseits das massebehaftete Fahrzeug über Ketten in lineare Bewegung versetzen.

Die Rekuperation von kinetischer Energie kann dabei während des Bremsens bei Geradeausfahrt erfolgen oder beim Lenken durch einseitige Verstellung von nur einem Hydraulikkreislauf. Beim Abbremsen während der Geradeausfahrt erfolgt die stufenlose Verstellung der Hydraulikkreisläufe beidseitig gleich, durch quantitativ gleiche Vergrößerung der Übersetzungen, d.h. je nach aktuellem Geschwindigkeitswert eine Vergrößerung der Schwenkwinkel von den Hydraulikmotoren oder eine Verkleinerung der Schwenkwinkel der Hydraulikpumpen. In diesem Betriebszustand des Abbremsens werden dann die Hydraulikmotoren im Pumpenbetrieb wirken, angetrieben von der Fahrzeugmasse, und die Hydraulikpumpen arbeiten motorisch und treiben ihrerseits nun auch das Pumpenverteilergetriebe an. Die in das Pumpenverteilergetriebe geleitete Energie kann nun wiederverwendet werden, z.B. zum Betrieb von Nebenantrieben. Während des Lenkens erfolgt prinzipiell die gleiche Prozedur, aber mit ungleicher Verstellung der beiden rechts und links angeordneten Hydraulikkreisläufe, wodurch die Fahrzeugmasse einseitig abgebremst und dadurch gelenkt wird und der Energie- bzw. Leistungsfluss von der abzubremsenden Seite in die gegenüberliegende Seite fließt bzw. rekuperiert wird.

Zur kontrollierten Einstellung der gewünschten Fahrtrichtung, bzw. Lenkbewegung, wird der Drehwinkel eines Lenkrades messtechnisch als Führungsgröße erfasst und einer Steuer- und Regelungseinheit zugeführt. Der Steuer- und Regelungseinheit werden als Istwerte auch die Abtriebsdrehzahlen beidseitiger Summierungsgetriebe und damit indirekt auch die Drehzahlen der Hydraulikmotoren zugeführt. Mit der Steuer- und Regelungseinheit wird der Drehwinkel des Lenkrades mit der Drehzahldifferenz der beidseitigen Abtriebswellen der Hydraulikmotoren verglichen und ggf. angepasst durch entsprechende Verstellung der Hydraulikkreisläufe.

Weiterhin besteht die Möglichkeit, pro Hydraulikkreislauf mindestens einen Hydraulikmotor pro Fahrzeugseite entweder über eine Kupplung mechanisch zu entkoppeln und/oder über ein Ventil hydraulisch abzuschalten. Die Einstellung der Höhe der zu rekuperierenden Energie kann dann wahlweise von mindestens einem der beiden auf jeweils einer Seite angebrachten Hydraulikmotoren erfolgen oder durch über die Steuer- und Regelungseinheit abgestimmte gleichzeitige Ansteuerung durchgeführt werden.

Zur weiteren Optimierung des Fahr- und Lenkungsverhaltens sowie der Wirkungsgradoptimierung wird eine parameteradaptive Regelung verwendet, die als Eingangsgrößen die Betriebsdaten vom Antriebsmotor, die Hydraulikdrücke über Drucksensoren, die Temperaturen und Drehzahlen einzelner oder aller Antriebskomponenten sowie Stellgrößen des Fahrpersonals, nämlich Lenkrad, Bremse und Gaspedal, ganz oder teilweise erfassen kann.

Die Summierungsgetriebe und weiteren Getriebe können wahlweise feste Übersetzungen aufweisen oder auch Stufenschaltgetriebe sein. Die Übersetzungen auf den Abtrieb können von den Antrieben aus betrachtet, unterschiedlich sein, wie auch die Größen der Hydraulikfahrmotoren. Der Abtrieb der Summierungsgetriebe kann wahlweise direkt auf ein Kettenrad wirken oder auch zur antriebstechnischen Optimierung über ein oder mehrere zwischengeschaltete Getriebe, die auch wahlweise feste Übersetzungen aufweisen oder auch schaltbar sein können.

Das erfindungsgemäße Antriebssystem für Kettenfahrzeuge und kettengetriebene Arbeitsmaschinen kann in allen Fahrzeugen eingesetzt werden. Dies betrifft unter anderem Raupen, Panzer, Radlader, Nutzfahrzeuge, Spezialfahrzeuge, Agrarmaschinen oder dergleichen.

Der Erfindungsgegenstand ist anhand mehrerer Ausführungsbeispiele in den Zeichnungen dargestellt und wird wie folgt beschrieben. Es zeigen
- Figur 1: Prinzipskizze des Antriebsschemas für ein Antriebssystem für Kettenfahrzeuge mit jeweils zwei zugeschalteten Hydraulikpumpen und zwei zugeschalteten Hydraulikmotoren für jeweils einen rechten und einen linken Hydraulikkreislauf.
- Figur 2: Prinzipskizze des Antriebsschemas für ein Antriebssystem für Kettenfahrzeuge mit einer hydraulisch abgeschalteten Hydraulikpumpe bei Rechtslenkung.
- Figur 3: Prinzipskizze des Antriebsschemas für ein Antriebssystem für Kettenfahrzeuge mit einer hydraulisch abgeschalteten Hydraulikpumpe und einem hydraulisch abgeschalteten Hydraulikfahrmotor bei Rechtslenkung mit hoher Geschwindigkeit.

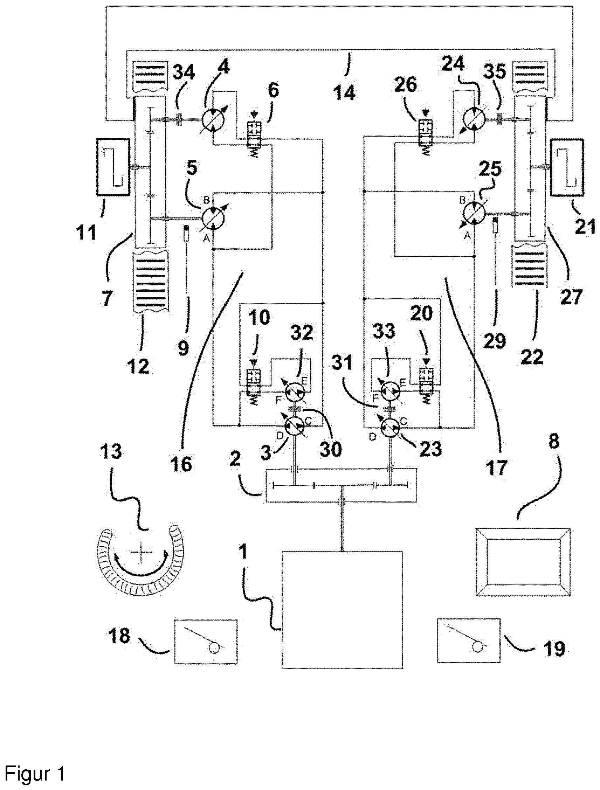

Figur 1 zeigt als Prinzipskizze des Antriebsschemas für ein Antriebssystem für Kettenfahrzeuge mit jeweils zwei zugeschalteten Hydraulikpumpen und zwei zugeschalteten Hydraulikmotoren für jeweils einen rechten und einen linken Hydraulikkreislauf:
Ein Antriebsmotor 1 treibt über ein Pumpenverteilergetriebe 2 unabhängig voneinander ansteuerbare Hydraulikkreisläufe 16,17 an. Der Hydraulikkreislauf 16 besteht aus als Hydraulikfahrpumpen 3,32 ausgebildeten Hydraulikpumpen sowie als Hydraulikfahrmotoren 4,5 ausgebildeten Hydraulikmotoren. Der Hydraulikkreislauf 17 besteht in analoger Weise aus als Hydraulikfahrpumpen 23,33 ausgebildeten Hydraulikpumpen und als Hydraulikfahrmotoren 24,25 ausgebildeten Hydraulikmotoren. Die Hydraulikfahrmotoren 4,5 sowie 24,25 wirken unabhängig voneinander auf jeweils ein Summierungsgetriebe 7,27. Die Abtriebe der Summierungsgetriebe 7,27 treiben über Ketten 12,22 das Kettenfahrzeug direkt an oder wahlweise über weitere Getriebe 11 links und Getriebe 21 rechts.

Während einer Geradeausfahrt werden die Hydraulikkreisläufe 16,17 durch eine Steuer- und Regeleinheit 8 beidseitig und quantitativ gleich so eingestellt, dass die Übersetzung der Hydraulikkreisläufe 16,17 gleich sind und deswegen die Abtriebsdrehzahlen der Summierungsgetriebe 7,27 gleich sind. Hierzu werden die Abtriebsdrehzahlen von den Hydraulikmotoren 5,25 als Istwerte über einen Drehzahlsensor 9 (links) und einen Drehzahlsensor 29 (rechts) gemessen und der Steuer- und Regeleinheit 8 zugeführt, welche die unabhängig voneinander ansteuerbaren Hydraulikkreisläufe 16,17 auf Drehzahlgleichheit regelt. Die Istwerte der Abtriebsdrehzahlen können wahlweise auch über nicht dargestellte Drehzahlsensoren in den Summierungsgetrieben 7,27 oder Getrieben 11,21 (links, rechts) erfasst werden.

Während einer Kurvenfahrt werden die Hydraulikkreisläufe 16,17 durch die Steuer- und Regeleinheit 8 quantitativ auf ungleiche Übersetzungen der Hydraulikkreisläufe 16,17 eingestellt, abhängig von am Lenkrad 13 messtechnisch erfassten Führungsgrößen, die der Steuer- und Regeleinheit 8 zugeführt werden.

Während einer Kurvenfahrt wirkt einer der beiden Hydraulikkreisläufe 16,17 bremsend. Zum Beispiel wird bei einer Rechtslenkung der Hydraulikkreislauf 17 auf kleinere Geschwindigkeitswerte eingestellt, als der Hydraulikkreislauf 16, wodurch dann die Hydraulikmotoren 24,25 bremsend, also im Pumpenbetrieb, wirken, angetrieben von der Fahrzeugmasse, und die Hydraulikpumpen 23,33 arbeiten motorisch und treiben ihrerseits nun auch das Pumpenverteilergetriebe 2 an. Die in das Pumpenverteilergetriebe 2 geleitete rekuperierte Leistung bzw. Energie kann nun wiederverwendet werden, z.B. zum Betrieb von nicht dargestellten Nebenantrieben oder als zusätzliche Fahrleistung für den Hydraulikkreislauf 16. Der Hydraulikkreislauf 16 muss in diesem Betriebsfall die gesamte Fahr- und Lenkleistung allein übertragen können, während der bremsende Hydraulikkreislauf 17 in der Regel nur relativ niedrige Leistungswerte übertragen muss. Zur Verbesserung der Wirkungsgrade wird deswegen bei der Rechtslenkung die Fahrpumpe 33 aufgrund niedrigen Leistungsbedarfes abgeschaltet, so dass ausschließlich die Fahrpumpe 23 im Hydraulikkreislauf 17 aktiv ist. Im Hydraulikkreislauf 16 wird bei hoher Fahrleistung keine Pumpenabschaltung aktiviert, sondern beide Hydraulikpumpen 3/32 übertragen Leistung.

Beim Linkslenken erfolgt die gleiche Prozedur mit den jeweils andersseitigen Komponenten.

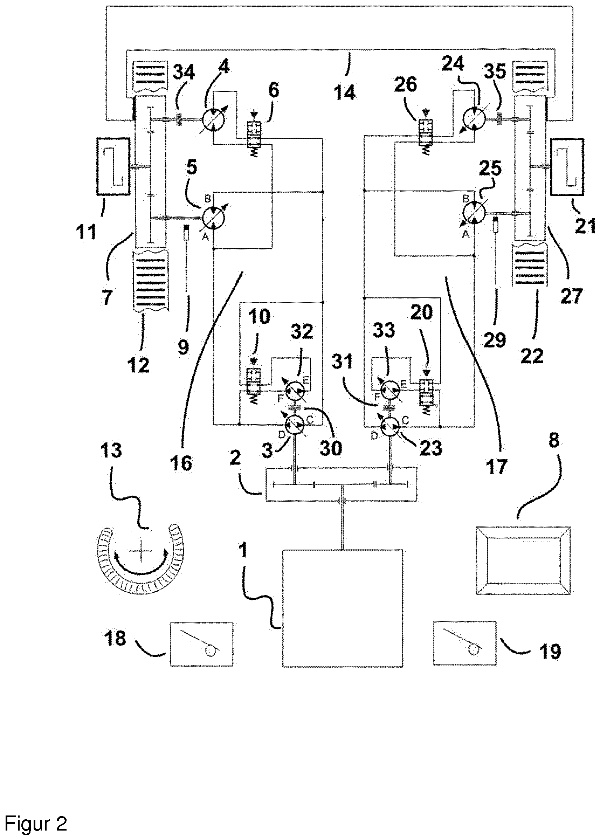

Figur 2 zeigt eine Prinzipskizze des Antriebsschemas für ein Antriebssystem für Kettenfahrzeuge mit einer hydraulisch abgeschalteten Hydraulikpumpe bei Rechtslenkung.

Die Abschaltung der Hydraulikpumpen 33 kann mechanisch über das Lösen der Pumpenkupplung 31 und/oder hydraulisch über das Pumpenabschaltventil 20 erfolgen.

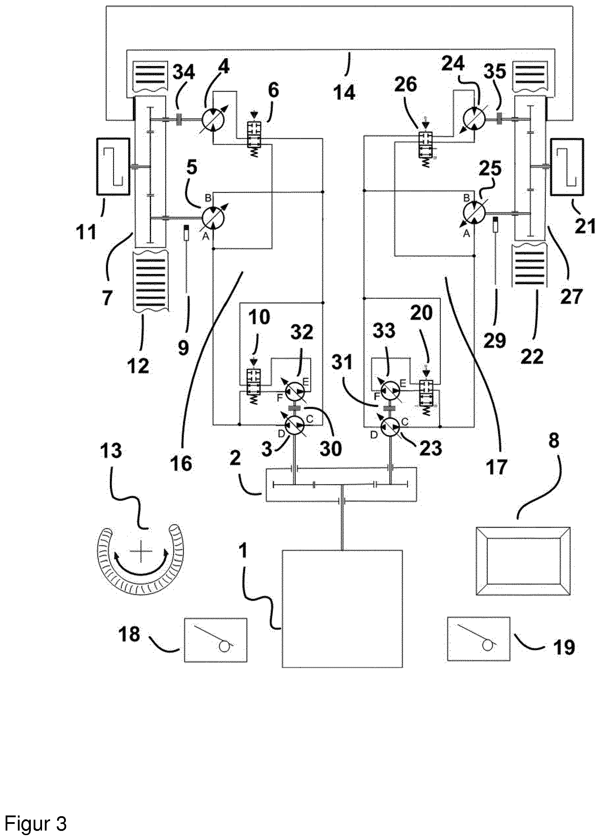

Figur 3 zeigt eine Prinzipskizze des Antriebsschemas für ein Antriebssystem für Kettenfahrzeuge mit einer hydraulisch abgeschalteten Hydraulikpumpe und einem hydraulisch abgeschalteten Hydraulikfahrmotor bei Rechtslenkung mit hoher Geschwindigkeit.

Die Abschaltung der Hydraulikpumpe 33 und die Abschaltung des Hydraulikmotors 24 erfolgt über das Pumpenabschaltventil 20 und/oder über das Motorabschaltventil 26.

Die Abschaltung des Hydraulikfahrmotors 24 erfolgt in Abhängigkeit der momentan geforderten Werte für Leistung, Zugkraft und Geschwindigkeit.

**Bezugszeichen**

| | | | |
|---|---|---|---|
| 1 | Antriebsmotor | 27 | Summierungsgetriebe rechts |
| 2 | Pumpenverteilergetriebe | 28 | frei |
| 3 | erste Hydraulikpumpe links | 29 | Drehzahlsensor rechts |
| 4 | erster Hydraulikfahrmotor links | 30 | Pumpenkupplung links |
| 5 | zweiter Hydraulikfahrmotor links | 31 | Pumpenkupplung rechts |
| 6 | Motorabschaltventil links | 32 | zweite Hydraulikpumpe links |
| 7 | Summierungsgetriebe links | 33 | zweite Hydraulikpumpe rechts |
| 8 | Steuer- und Regelungseinheit | 34 | Motorkupplung links |
| 9 | Drehzahlsensor links | 35 | Motorkupplung rechts |
| 10 | Pumpenabschaltventil links | | |
| 11 | Getriebe links | | |
| 12 | Kette links | | |
| 13 | Lenkrad | | |
| 14 | Fahrzeugmasse | | |
| 15 | frei | | |
| 16 | Hydraulikkreislauf links | | |
| 17 | Hydraulikkreislauf rechts | | |
| 18 | Gaspedal | | |
| 19 | Bremse | | |
| 20 | Pumpenabschaltventil rechts | | |
| 21 | Getriebe rechts | | |
| 22 | Kette rechts | | |
| 23 | erste Hydraulikpumpe rechts | | |
| 24 | erster Hydraulikfahrmotor rechts | | |
| 25 | zweiter Hydraulikfahrmotor rechts | | |
| 26 | Motorabschaltventil rechts | | |

## Patentansprüche

1. Antriebssystem für Kettenfahrzeuge und kettengetriebene Arbeitsmaschinen, bestehend aus mindestens einem Antriebsmotor (1), mindestens einem mit dem Antriebsmotor (1) in Wirkverbindung stehenden Pumpenverteilergetriebe (2) und mindestens jeweils einem stufenlos verstellbaren Hydraulikkreislauf (16, 17) pro Fahrzeugseite, **dadurch gekennzeichnet, dass** jeder Hydraulikkreislauf (16, 17) aus mindestens jeweils zwei Hydraulikpumpen (3, 32, 23, 33) und mindestens einem Hydraulikmotor (5, 25) besteht, wobei die Hydraulikpumpen (3, 32, 23, 33) in Wirkverbindung mit dem Pumpenverteilergetriebe (2) stehen, wobei entweder mindestens ein Hydraulikmotor (4, 24) und/oder mindestens eine Hydraulikpumpe (32, 33) zur Verbesserung der Wirkungsgrade zu- oder abschaltbar ist.

2. Antriebssystem nach Anspruch 1, **dadurch gekennzeichnet, dass** die Abschaltung der Hydraulikmotoren (4,24) und/oder Hydraulikpumpen (32,33) mechanisch über Kupplungen (30,31,34,35) und/oder hydraulisch über Abschaltventile (10,20,34,35) erfolgt.

3. Antriebssystem nach Anspruch 1 oder 2, **dadurch gekennzeichnet, dass** die Abschaltung der Hydraulikpumpen (32,33) leistungsabhängig erfolgt.

4. Antriebssystem nach einem der Ansprüche 1 bis 3, **dadurch gekennzeichnet, dass** die Abschaltung der Pumpen (32,33) druckabhängig erfolgt.

5. Antriebssystem nach einem der Ansprüche 1 bis 4, **dadurch gekennzeichnet, dass** die Abschaltung der als Hydraulikfahrmotoren (4,24) ausgebildeten Hydraulikmotoren zugkraftabhängig und/oder drehzahlabhängig erfolgt.

6. Antriebssystem nach einem der Ansprüche 1 bis 5, **dadurch gekennzeichnet, dass** die Abschaltventile (6,10,20,26) als stetige oder unstetige Wegeventile ausgebildet sind.

7. Antriebssystem nach einem der Ansprüche 1 bis 6, **dadurch gekennzeichnet, dass** ein jeder Hydraulikkreislauf (16,17) mit mindestens einem Summierungsgetriebe (7,27) in Wirkverbindung steht.

8. Antriebssystem nach einem der Ansprüche 1 bis 7, **dadurch gekennzeichnet, dass** das Pumpenverteilergetriebe (2), die Hydraulikkreisläufe (16,17) und die Summierungsgetriebe (7,27) in einem Gehäuse untergebracht sind.

9. Antriebssystem nach einem der Ansprüche 1 bis 8, **dadurch gekennzeichnet, dass** Richtung und Höhe eines Leistungsflusses oder beider Leistungsflüsse der Hydraulikkreisläufe (16, 17) dergestalt eingestellt wird/werden, dass eine kontrollierte Lenkbewegung einer Fahrzeugmasse (14) bewirkt wird.

10. Antriebssystem nach einem der Ansprüche 1 bis 9, **dadurch gekennzeichnet, dass** zur Einstellung einer kontrollierten Lenkbewegung des Kettenfahrzeugs oder der Arbeitsmaschine der Drehwinkel eines Lenkrades (13) messtechnisch erfasst wird und als Führungsgröße verwendbar ist.

11. Antriebssystem nach einem der Ansprüche 1 bis 10, **dadurch gekennzeichnet, dass** bei der Verwendung von mindestens einem zusätzlichen und abschaltbarem Hydraulikmotor (4, 24) pro Fahrzeugseite die Einstellung der Höhe einer zu rekuperierenden Leistung wahlweise von mindestens einem Hydraulikmotor (4, 24) und/oder mindestens einem Hydraulikmotor (5, 25) herbeiführbar ist.

12. Antriebssystem nach einem der Ansprüche 1 bis 11, **dadurch gekennzeichnet, dass** bei der Verwendung von mindestens einem zusätzlichen und abschaltbarem Hydraulikmotor (4, 24) pro Fahrzeugseite, der Bereich der direkten Verbindung zwischen Hochdruckanschlüssen (A,B) der nicht abschaltbaren Hydraulikmotoren (5, 25) und Hochdruckanschlüssen (C,D) der Hydraulikpumpen (3, 23) ohne Verwendung von hydraulischen Widerständen in Form von Ventilen ausführbar ist.

13. Verfahren zur Steuerung eines Antriebssystems für Kettenfahrzeuge und kettengetriebene Arbeitsmaschinen nach einem der Ansprüche 1 bis 12, **dadurch gekennzeichnet, dass** zur Verbesserung der Wirkungsgrade die Richtung und die Höhe der Leistungsflüsse der Hydraulikkreisläufe (16, 17) unabhängig voneinander stufenlos einstellbar sind, dergestalt, dass über die Steuer- und Regelungseinheit (8) die Stellung des Gaspedales als Führungsgröße erfasst wird und mit den Drehzahlen der Hydraulikfahrmotoren (5,25) als Istwerte verglichen werden und davon abhängig die Verstellung der Hydraulikpumpen (3,23,32,33) und die Verstellung der Hydraulikfahrmotoren (4,5,24,25) eingestellt werden und die Zu- und Abschaltung der Hydraulikpumpen (32,33) und Hydraulikfahrmotoren (4, 24) erfolgt.

14. Verfahren nach Anspruch 13, **dadurch gekennzeichnet, dass** der vom Fahrer eingestellte Lenkeinschlag messtechnisch als Führungsgröße erfasst wird und über Drehzahlsensoren (9, 29), direkt oder indirekt, die Drehzahlen der Abtriebswellen messtechnisch als Istwert erfasst werden, wobei alle Messwerte einer elektronischen Steuer- und Regelungseinheit (8) zugeführt werden, welche durch unterschiedliches Verstellen der Hydraulikkreisläufe (16,17) die Lenkung entsprechend der vom Fahrer eingestellten Führungsgröße regeln.

15. Verfahren nach einem der Ansprüche 13 bis 14, **dadurch gekennzeichnet, dass** zur Optimierung des Fahr- und Lenkungsverhaltens und der Wirkungsgrade die Einstellung der Hydraulikfahrmotoren (4,5,24,25), der Hydraulikfahrpumpen (3, 32, 23, 33), und der Drehzahl des Antriebsmotors (1) mit einer parameteradaptiven Regelung durchgeführt wird.

16. Verfahren nach einem der Ansprüche 13 bis 15, **dadurch gekennzeichnet, dass** die zu einer parameteradaptiven Regelung verwendeten Parameter, nämlich die Betriebsdaten des Antriebsmotors, die Hydraulikdrücke, die Temperaturen und Drehzahlen einzelner oder aller Antriebskomponenten sowie die Stellgrößen vom Fahrpersonal, Gaspedal, Bremse und Lenkrad, ganz oder teilweise eingesetzt werden.

## Claims

1. A drive system for tracked vehicles and tracked work machines, consisting of at least one drive motor (1), at least one pump transfer case (2) that is operatively connected to the drive motor (1) and at least one continuously variable hydraulic circuit (16, 17) for each vehicle side, **characterized in that** each hydraulic circuit (16, 17) consists of respectively at least two hydraulic pumps (3, 32, 23, 33) and at least one hydraulic motor (5, 25), wherein the hydraulic pumps (3, 32, 23, 33) are operatively connected to the pump transfer case (2), wherein either at least one hydraulic motor (4, 24) and/or at least one hydraulic pump (32, 33) can be connected or switched off for improving the efficiency levels.

2. A drive system according to claim 1, **characterized in that** the hydraulic motors (4, 24) and/or hydraulic pumps (32, 33) are switched off mechanically via couplings (30, 31, 34, 35) and/or hydraulically via shutoff valves (10, 20, 34, 35).

3. A drive system according to claim 1 or 2, **characterized in that** the hydraulic pumps (32, 33) are switched off in dependence on the power output.

4. A drive system according to one of the claims 1 through 3, **characterized in that** the pumps (32, 33) are switched off in dependence on the pressure.

5. A drive system according to one of the claims 1 through 4, **characterized in that** the hydraulic motors that are configured as hydraulic traction motors (4, 24) are switched off in dependence on the tensile force and/or the rotational speed.

6. A drive system according to one of the claims 1 through 5, **characterized in that** the shutoff valves (6, 10, 20, 26) are configured as continuous or discontinuous directional valves.

7. A drive system according to one of the claims 1 through 6, **characterized in that** each hydraulic circuit (16, 17) is operatively connected to at least one compounding gearbox (7, 27).

8. A drive system according to one of the claims 1 through 7, **characterized in that** the pump transfer case (2), the hydraulic circuits (16, 17) and the compounding gearboxes (7, 27) are accommodated in one housing.

9. A drive system according to one of the claims 1 through 8, **characterized in that** the direction and the level of a power flow or both power flows of the hydraulic circuits (16, 17) is/are set in such a way that a controlled steering movement of a vehicle mass (14) is achieved.

10. A drive system according to one of the claims 1 through 9, **characterized in that** for setting a controlled steering movement of the tracked vehicle or the work machine, the rotation angle of a steering wheel will be metrologically registered and can be used as reference variable.

11. A drive system according to one of the claims 1 through 10, **characterized in that** in case of using at least one additional hydraulic motor (4, 24), that can be switched off, for each vehicle side, the setting of the level of a power to be recuperated can be optionally realized by at least one hydraulic motor (4, 24) and/or at least one hydraulic motor (5, 25).

12. A drive system according to one of the claims 1 through 11, **characterized in that** in case of using at least one additional hydraulic motor (4, 24), that can be switched off, for each vehicle side, the area of the direct connection between high-pressure connections (A, B) of the hydraulic motors (5, 25) which cannot be switched off and high-pressure connections (C, D) of the hydraulic pumps (3, 23) can be realized in form of valves without using hydraulic resistances.

13. A method for controlling a drive system for tracked vehicles and tracked work machines according to one of the claims 1 through 12, **characterized in that** for improving the efficiency levels, the directions and the levels of the power flows of the hydraulic circuits (16, 17) can be continuously adjusted independently from each other, such that the position of the accelerator will be gathered as reference variable by the control unit (8), and they will be compared with the rotation speeds of the hydraulic traction motors (5, 25) as actual values, and in dependence on this the adjustment of the hydraulic pumps (3, 23, 32, 33) and the adjustment of the hydraulic traction motors (4, 5, 24, 25) will be set and the connection and switching off of the hydraulic pumps (32, 33) and the hydraulic traction motors (4, 24) will be realized.

14. A method according to claim 13, **characterized in that** the steering angle set by the driver will be metrologically registered as reference variable and the rotational speeds of the output shafts will be metrologically registered as actual values, directly or indirectly via rotational speed sensors (9, 29), wherein all measured values will be transmitted to an electronic control unit (8) which will control the steering in correspondence to the reference variable set by the driver by means of different adjustments of the hydraulic circuits (16, 17).

15. A method according to one of the claims 13 through 14, **characterized in that** the adjustment of the hydraulic traction motors (4, 5, 24, 25), the hydraulic traction pumps (3, 32, 23, 33) and the rotational speed of the drive motor (1) will be carried out by means of a parameter-adaptive control for optimizing the driving and steering behaviour and the efficiency levels.

16. A method according to one of the claims 13 through 15, **characterized in that** the parameters used for a parameter-adaptive control, namely the operating data of the drive motor, the hydraulic pressures, the temperatures and the rotational speeds of individual ones or all drive components as well as the regulating variables of the driving personnel, accelerator, brake and steering wheel, will be completely or partly used.

## Revendications

1. Système d'entraînement pour des véhicules à chenilles et des machines de travail à chenilles, composé d'au moins un moteur d'entraînement (1), d'au moins une boîte de transfert à pompes (2), qui est en liaison opérationnelle avec le moteur d'entraînement (1), et d'au moins un circuit hydraulique (16, 17) réglable en continu de chaque côté du véhicule, **caractérisé en ce que** chaque circuit hydraulique (16, 17) est constitué d'au moins deux pompes hydrauliques (3, 32, 23, 33) et d'au moins un moteur hydraulique (5, 25), les pompes hydrauliques (3, 32, 23, 33) étant en liaison opérationnelle avec la boîte de transfert à pompes (2), au moins un moteur hydraulique (4, 24) et/ou au moins une pompe hydraulique (32, 33) pouvant être activé ou désactivé pour améliorer les niveaux d'efficacité.

2. Système d'entraînement selon la revendication 1, **caractérisé en ce que** la désactivation des moteurs hydrauliques (4, 24) et/ou des pompes hydrauliques (32, 33) se fait mécaniquement via des accouplements (30, 31, 34, 35) et/ou hydrauliquement via des vannes d'arrêt (10, 20, 34, 35).

3. Système d'entraînement selon la revendication 1 ou la revendication 2, **caractérisé en ce que** la désactivation des pompes hydrauliques (32, 33) est réalisée en fonction du rendement.

4. Système d'entraînement selon l'une des revendications 1 à 3, **caractérisé en ce que** la désactivation des pompes (32, 33) est réalisée en fonction de la pression.

5. Système d'entraînement selon l'une des revendications 1 à 4, **caractérisé en ce que** la désactivation des moteurs hydrauliques configurés comme des moteurs de traction hydrauliques (4, 24) est réalisée en fonction de la force de traction et/ou en fonction de la vitesse du moteur.

6. Système d'entraînement selon l'une des revendications 1 à 5, **caractérisé en ce que** les vannes d'arrêt (6, 10, 20, 26) sont configurées comme des soupapes directionnelles continues ou discontinues.

7. Système d'entraînement selon l'une des revendications 1 à 6, **caractérisé en ce que** chaque circuit hydraulique (16, 17) est en liaison opérationnelle avec au moins un mécanisme de sommation (7, 27).

8. Système d'entraînement selon l'une des revendications 1 à 7, **caractérisé en ce que** la boîte de transfert à pompes (2), les circuits hydrauliques (16, 17) et les mécanismes de sommation (7, 27) sont logés dans un boîtier.

9. Système d'entraînement selon l'une des revendications 1 à 8, **caractérisé en ce que** la direction et le niveau d'un flux de rendement ou des deux flux de rendement des circuits hydrauliques (16, 17) est/sont réglé(s) de sorte qu'un mouvement de direction contrôlé d'une masse de véhicule (14) est obtenu.

10. Système d'entraînement selon l'une des revendications 1 à 9, **caractérisé en ce que** pour régler un mouvement de direction contrôlé du véhicule moteur ou de la machine de travail, l'angle de rotation d'un volant (13) est saisi de manière métrologique et peut être utilisé en tant que variable de référence.

11. Système d'entraînement selon l'une des revendications 1 à 10, **caractérisé en ce que** dans le cas où au moins un moteur hydraulique (4, 24) supplémentaire et pouvant être désactivé est utilisé par côté de véhicule, le réglage du niveau d'un rendement à récupérer peut être réalisé sélectivement par au moins un moteur hydraulique (4, 24) et/ou par au moins un moteur hydraulique (5, 25).

12. Système d'entraînement selon l'une des revendications 1 à 11, **caractérisé en ce que** dans le cas où au moins un moteur hydraulique (4, 24) supplémentaire et pouvant être désactivé est utilisé par côté de véhicule, la zone de la liaison directe entre des raccords à haute pression (A, B) des moteurs hydrauliques (5, 25), qui ne peuvent pas être désactivés, et des raccords à haute pression (C, D) des pompes hydrauliques (3, 23) peut être réalisée en forme de soupapes sans utiliser des résistances hydrauliques.

13. Procédé de commande d'un système d'entraînement pour des véhicules à chenilles et des machines de travail à chenilles selon l'une des revendications 1 à 12, **caractérisé en ce que** pour améliorer les niveaux d'efficacité, la direction et le niveau des flux de rendement des circuits hydrauliques (16, 17) peuvent être réglés en continu et de manière indépendante l'un de l'autre, de sorte que la position de l'accélérateur est saisie en tant que variable de référence par l'unité de commande (8) et ils sont comparés avec les vitesses de rotation des moteurs de traction hydrauliques (5, 25) en tant que valeurs réelles, et en fonction de cela l'ajustement des pompes hydrauliques (3, 23, 32, 33) et l'ajustement des moteurs de traction hydrauliques (4, 5, 24, 25) sont réalisés et les pompes hydrauliques (32, 33) et les moteurs de traction hydrauliques (4, 24) sont connectés et désactivés.

14. Procédé selon la revendication 13, **caractérisé en ce que** l'angle de braquage fixé par le conducteur est saisi de manière métrologique en tant que variable de référence et les vitesses de rotation des arbres entraînés sont saisies directement ou indirectement de manière métrologique en tant que valeurs réelles par des capteurs de vitesse de rotation (9, 29), toutes les valeurs mesurées étant transmises à une unité de commande (8) électronique, qui commande la direction de manière correspondante à la variable de référence fixée par le conducteur par moyen d'ajustements différents des circuits hydrauliques (16, 17).

15. Procédé selon l'une des revendications 13 à 14, **caractérisé en ce que** pour optimiser le comportement de roulement et de braquage et les niveaux d'efficacité, le réglage des moteurs de traction hydrauliques (4, 5, 24, 25), des pompes hydrauliques (3, 32, 23, 33) et de la vitesse de rotation du moteur d'entraînement (1) est effectué par moyen d'une commande adaptative par rapport aux paramètres.

16. Procédé selon l'une des revendications 13 à 15, **caractérisé en ce que** les paramètres utilisés pour une commande adaptative par rapport aux paramètres, à savoir les données opérationnelles du moteur d'entraînement, les pressions hydrauliques, les températures et les vitesses de rotation des composants d'entraînement individuels ou de tous les composants d'entraînement ainsi que les valeurs de réglage du personnel de conduite, de l'accélérateur, du frein et du volant sont complètement ou partiellement utilisées.
